# EUROPÄISCHE PATENTSCHRIFT

(11) **EP 1 284 093 B1**
(45) Veröffentlichungstag und Bekanntmachung des Hinweises auf die Patenterteilung: **09.12.2009**
(21) Anmeldenummer: 00925018.4
(22) Anmeldetag: 23.05.2000
(51) Int. Cl.: H04W 64/00

(54) **VERFAHREN UND SYSTEM ZUR AUSFÜHRUNG VON ORTSABHÄNGIGEN DIENSTLEISTUNGSAPPLIKATIONEN FÜR MOBILFUNKENDGERÄTE**
METHOD AND SYSTEM FOR CARRYING OUT LOCALISED SERVICE APPLICATIONS FOR MOBILE RADIO TERMINALS
PROCEDE ET SYSTEME POUR LA MISE EN OEUVRE D'APPLICATIONS DE SERVICE LOCALISEES POUR TERMINAUX RADIOTELEPHONIQUES MOBILES

(43) Veröffentlichungstag der Anmeldung: 19.02.2003
(73) Patentinhaber: Swisscom AG, 3050 Bern (CH)
(72) Erfinder: RITTER, Rudolf, CH-3052 Zollikofen (CH); JOST, Herbert, CH-3007 Bern (CH)
(74) Vertreter: BOVARD AG
(86) Internationale Anmeldenummer: PCT/CH2000/000288
(87) Internationale Veröffentlichungsnummer: WO 2001/091498

(56) Entgegenhaltungen:
- EP-A- 0 923 256
- EP-A- 0 973 351
- WO-A-99/27742
- "DIGITAL CELLULAR TELECOMMUNICATIONS SYSTEM (PHASE 2+);LOCATION SERVICES (LCS); (FUNCTIONAL DESCRIPTION) - STAGE 2 (GSM 03.71 VERSION 7.0.0 RELEASE 1998)" EUROPEAN TELECOMMUNICATION STANDARD,XX,XX, August 1999 (1999-08), Seiten 1-59, XP002132874 in der Anmeldung erwähnt

## Beschreibung

Die vorliegende Erfindung betrifft ein Verfahren und ein System zur Ausführung von ortsabhängigen Dienstleistungsapplikationen für Mobilfunkendgeräte. Dabei übermittelt eine ortsabhängige Dienstleistungsapplikation eine Anweisung zur Positionsbestimmung an ein Mobilfunktelefonnetz. Im Mobilfunktelefonnetz wird aus laufzeitabhängigen und damit distanzabhängigen Messdaten und den Standortkoordinaten von mehreren Basisstationen eine Näherung für die Position des Mobilfunkendgerätes bestimmt und an die betreffende Dienstleistungsapplikation zurückgegeben.

Eine Reihe von Anwendungen und Zusatzdiensten der Telefonie basieren darauf, dass die Position des Endgerätes bekannt ist. Bei Festnetzanschlüssen machen z.B. Polizei und Feuerwehr schon seit langem davon Gebrauch, einen Anrufer auf Grund des Telefonanschlusses zu lokalisieren. Die Verbreitung von Mobilfunktelefonen eröffnet eine Vielzahl von Möglichkeiten für neue Zusatzdienste wie z.B. ortsabhängige Navigationshilfen für Autofahrer, oder ortsabhängige Abrechnung von Telekom-Dienstleistungen. Dies setzt selbstverständlich voraus, dass die Position des Mobilfunkendgerätes mit hinreichender Genauigkeit bekannt ist.

Dokument WO 99/61934 beschreibt mehrere Verfahren und Systeme zur Positionsbestimmung eines Mobilfunkendgerätes, in welchen sowohl Signale von Navigationssatelliten als auch Signale von terrestrischen Sendern im Mobilfunkendgerät empfangen und ausgewertet werden. Dabei werden die Laufzeiten der Signale gemessen und in entsprechende Entfernungswerte umgewandelt. Aus den Entfernungswerten und den Positionen der Navigationssatelliten und der terrestrischen Sender wird anschliessend eine Näherung für die Position des Mobilfunkendgerätes berechnet. In einer weiteren Ausführungsform, die in WO 99/61934 beschrieben ist, messen terrestrische Empfänger mit bekannten Positionen die Laufzeiten von Signalen, welche das Mobilfunkendgerät aussendet.

Auf einer Web Page des Institute of Micro Technology (IMT) der Universität Neuenburg (http:/lwww-imt.unine.ch/mogid/, datiert vom 8. Dez. 1999) wird ein Zusatzdienst für GSM-Mobilfunktelefonnetze beschrieben, der es Mobilfunkteilnehmern ermöglicht, ortsrelevante Informationen abzurufen. Dabei wird automatisch eine Näherung für die Position des Mobilfunktelefons ermittelt, und die ermittelte Näherung dazu verwendet, um die ortsrelevanten Informationen aus einer geographisch organisierten Datenbank abzurufen und auf der Anzeige des Mobilfunktelefons anzuzeigen. Die Positionsbestimmung basiert auf der Auswertung von Timing Advance-Werten, welche die Basisstationen in einem GSM-Mobilfunktelefonnetz nach dem Einbuchen eines Mobilfunktelefons aussenden. Aus den Timing Advance-Werten und den bekannten Standorten der umliegenden Basisstationen wird im Mobilfunktelefon eine Näherung für die momentane Position berechnet und für den Abruf der ortsrelevanten Informationen zur Verfügung gestellt.

Im Dokument US 6'000'932A wird ein Telekommunikationssystem und ein Verfahren beschrieben, welche die Positionsbestimmung eines Mobilfunkendgerätes in einem GSM-Mobilfunktelefonnetz unterstützen, falls sich das Mobilfunkendgerät nicht in seinem Heimmobilfunktelefonnetz befindet. Die Funktionen für die Positionsbestimmung von Mobilfunkendgeräten sind innerhalb eines GSM-Mobilfunktelefonnetzes in sogenannten Mobile Positioning Centres (MPCs) zusammengefasst. In dem beschriebenen Verfahren wird die Adresse des lokalen MPC im Home Location Register (HLR) des Heimmobilfunktelefonnetz und die Adresse des Heim-MPC im Visitors Location Register (VLR) des lokalen Mobilfunktelefonnetzes, in dem das Mobilfunkendgerät eingebucht ist, gespeichert und bei jedem Wechsel des Mobile Switching Centre aktualisiert. Mit Hilfe der gespeicherten Adressen können Anfragen zur Positionsbestimmung eines Mobilfunkendgerätes direkt an das zuständige MPC weitergeleitet werden.

Im Dokument WO 99/63780 wird ein Telekommunikationssystem und ein Verfahren offenbart, welche dazu dienen, ortsabhängige Dienstleistungsapplikationen, welche Anweisungen zur Positionsbestimmung von Mobilfunkendgeräten an ein Mobilfunktelefonnetz übermitteln, zu überwachen und gegebenenfalls zu sperren. Zu diesem Zweck hat der Positioning Gateway (GMLC), welcher die Anweisungen zur Positionsbestimmung auf der Netzseite entgegennimmt, Zugriff auf schwarze und graue Listen. Für ortsabhängige Dienstleistungsapplikafionen auf der schwarzen Liste sind alle Funktionen zur Positionsbestimmung gesperrt, während ortsabhängige Dienstleistungsapplikationen auf der grauen Liste lediglich genauer überwacht werden. Die Positionsbestimmung des Mobilfunkendgerätes basiert im Dokument WO 99/63780, wie in der Mehrzahl der oben zitierten Dokumente, auf der Auswertung der Timing Advance-Werte (siehe dazu die Erläuterungen zum Dokument /mogid/).

Die europäische Patentanmeldung EP 0973351 A1 zeigt ein Verfahren, in welchem laufzeitabhängige Messdaten verschlüsselt an ein Mobilfunkgerät von den Basisstationen übermittelt werden, aus welchen anhand der laufzeitabhängigen Messdaten die aktuelle Position des Mobilfunkgerätes bestimmt werden kann. Die europäische Patentanmeldung EP 0923256 A2 zeigt ebenfalls ein Verfahren zur Positionsbestimmung eines Mobilfunkgerätes. In diesem Verfahren werden Positionsdaten von Basisstationen, in deren Sendebereich sich das Mobilfunkgerät befindet, an das Mobilfunkgerät übermittelt, wobei das Mobilfunkgerät die Positionsdaten zur Erfassung weiter an eine Positioriserfassungszentrale über das Mobilfunknetz übermittelt.

Werden die laufzeitabhängigen Messdaten im Mobilfunkendgerät gemessen und verfügt das Mobilfunkendgerät zusätzlich über die Standortdaten der betreffenden Basisstationen, so kann im Mobilfunkendgerät auf Grund der laufzeitabhängigen Messdaten und auf Grund der Standortdaten der betreffenden Basisstationen eine Näherung für die aktuelle Position berechnet werden. Diese Möglichkeit ist in den Dokumenten WO 99/61934, /mogid/ und WO 99/63780 erwähnt, ohne dass in diesen Dokumenten ausgeführt wird, wie das Mobilfunkendgerät zu den Standortdaten der betreffenden Basisstationen kommt. Insbesondere fehlen in den genannten Dokumenten Hinweise zum Ablauf des Standortdaten-Transfers, sowie Angaben dazu, wie das Mobilfunkendgerät genau diejenigen Standortdaten erhält, die es gerade benötigt.

Ein weiteres Problem betrifft die möglichst effiziente Erfassung der Stationsidentifikationsdaten und das möglichst effiziente Messen der laufzeitabhängigen Messwerte im Mobilfunkendgerät. Die Dokumente aus dem Stand der Technik geben dazu keine Hinweise. Erwünscht wären Lösungen, welche mit möglichst geringem Aufwand realisiert werden können.

Es ist eine Aufgabe der vorliegenden Erfindung, ein neues Verfahren und ein neues System zur Ausführung von ortsabhängigen Dienstleistungsapplikationen für Mobilfunkendgeräte vorzuschlagen, weiche die oben erwähnten Lücken im Stand der Technik schliessen.

Gemäss der vorliegenden Erfindung wird dieses Ziel insbesondere durch die Merkmale der unabhängigen Ansprüche erreicht. Weitere vorteilhafte Ausführungsformen gehen ausserdem aus den abhängigen Ansprüchen und aus der Beschreibung hervor.

Die vorliegende Erfindung lässt sich auf Verfahren und Systeme zur Ausführung von ortsabhängigen Dienstleistungsapplikationen für Mobilfunkteilnehmer und/oder Mobilfunkendgeräte anwenden, in welchen eine ortsabhängige Dienstleistungsapplikation eine Anweisung zur Positionsbestimmung an ein Mobilfunkendgerät übergibt und/oder übermittelt. Eine direkte Übergabe der Anweisung ist insbesondere dann aktuell, wenn sich die ortsabhängige Dienstleistungsapplikation im Mobilfunkendgerät selbst oder auf der zugehörigen SIM (Subscriber Identity Module)-Karte oder in einem direkt mit dem Mobilfunkendgerät verbundenen Gerät befindet. Die Übermittlung der Anweisung kann direkt oder via ein Positionsbestimmungs-Gateway, welches die Anweisungen von externen Dienstleistungsapplikationen entgegennimmt, und/oder via ein Positionsbestimmungszentrum, welches die Positionsbestimmungen innerhalb des Mobilfunktelefonnetzes koordiniert, erfolgen. In dem Verfahren und System gemäss der vorliegenden Erfindung werden Stationsidentifikationsdaten und laufzeitabhängige Messdaten von mindestens zwei nicht ortsgleichen Basisstationen im Mobilfunkendgerät erfasst und/oder ermittelt, wobei die laufzeitabhängigen Messdaten von den Distanzen zwischen den einzelnen Basisstationen und dem Mobilfunkendgerät abhängen. Für die Erfassung und/oder Ermittlung der Stationsidentifikationsdaten und laufzeitabhängigen Messdaten bestehen verschiedene Möglichkeiten, von denen nachstehend einige aufgeführt sind: Die erwähnten Daten können beispielsweise vom Mobilfunktelefonnetz ermittelt und dem Mobilfunkendgerät zur Verfügung gestellt werden. Das geschieht z.B. bei den Timing Advance-Werten, deren Bestimmung in den GSM-Spezifikationen geregelt ist. Weiter können die erwähnten Daten auch in einem speziell für die Positionsbestimmung durchgeführten Verfahren im Mobilfunkendgerät ermittelt werden. Eine weitere Möglichkeit, auf die im Folgenden noch speziell eingegangen wird, besteht darin, die Stationsidentifikationsdaten und laufzeitabhängige Messdaten aus den Handover-Messungen zu ermitteln, welche in einem GSM-Mobilfunkendgerät standardmässig durchgeführt werden. Selbstverständlich sind alle diese Varianten auch beliebig untereinander kombinierbar. Anschliessend wird im Mobilfunkendgerät auf Grund der genannten laufzeitabhängigen Messdaten und auf Grund von Standortkoordinaten der genannten Basisstationen eine Näherung für die Position des Mobilfunkendgerätes berechnet wird, welche Näherung vom Mobilfunkendgerät an die ortsabhängige Dienstleistungsapplikation zurückgegeben und/oder übermittelt wird. Das Verfahren und System gemäss der vorliegenden Erfindung zeichnet sich dadurch aus, dass die Stationsidentifikationsdaten, welche die genannten Basisstationen kennzeichnen, vom Mobilfunkendgerät an mindestens ein Standortinformationszentrum übermittelt werden, welches Standortinformationszentrum Zugriff auf Standortkoordinaten der genannten Basisstationen hat; und dass die Standortkoordinaten der genannten Basisstationen von dem mindestens einen Standortinformationszentrum an das Mobilfunkendgerät übermittelt werden. Die Funktion der oben erwähnten Standortinformationszentren kann in einem Mobilfunktelefonnetz, beispielsweise in einem GSM-Mobilfunktelefonnetz oder UMTS-Mobilfunktelefonnetz, von den Mobile Location Centres (MLC) übernommen werden, welche in der GSM-Spezifikation GSM 03.71 Version 7.0.0 (ETSI-Sekretariat, Fr-06921 Sophia Antipolis Cedex-France) beschrieben sind.

Vorteilhafterweise werden mindestens ein Teil der genannten Stationsidentifikationsdaten und mindestens ein Teil der genannten laufzeitabhängigen Messdaten aus Messungen ermittelt, wie sie im Rahmen des Handover-Prozesses im Mobilfunkendgerät durchgeführt werden. Ein grosser Vorteil dieser Methode liegt darin, dass die Handover-Messungen während einer normalen Verbindung im Hintergrund ablaufen. In vielen Fällen erübrigen sich damit zusätzliche Messungen im Mobilfunkendgerät, welche neben dem damit verbundenen zusätzlichen Aufwand im Falle von umfangreicheren Messungen entweder einen Unterbruch der laufenden Verbindung oder einen zweiten Empfänger erfordern würden.

Vorteilhafterweise gehören die genannten Basisstationen zu einem oder mehreren Basisstations-Controllern und/oder einem oder mehreren Mobilfunktelefonnetzen. Das bedeutet eine entsprechend grosse Freiheit bei der Auswahl der zu messenden Basisstationen. Von Bedeutung ist dabei der Umstand, dass mindestens ein Teil der laufzeitabhängigen Messdaten im Mobilfunkendgerät ermittelt wird. Werden dagegen die laufzeitabhängigen Messdaten auf der Basisstationsseite ermittelt, so muss die Erfassung der laufzeitabhängigen Messdaten in den verschiedenen Empfangseinrichtungen (z.B. in den Location Measurement Units (LMUs), welche in einem GSM-Mobilfunktelefonnetz standardmässig vorhanden sind) koordiniert werden, was einen beträchtlichen Aufwand erfordert, wenn die Empfangseinrichtungen zu verschiedenen Basisstations-Controllern oder gar zu verschiedenen Mobilfunktelefonnetzen gehören. In der Praxis werden deshalb vorwiegend Empfangseinrichtungen im Bereich desjenigen Basisstations-Controllers eingesetzt, in welchem das Mobilfunkendgerät eingebucht ist. Andererseits entsteht beim Ermitteln der laufzeitabhängigen Messdaten im Mobilfunkendgerät kein solcher Koordinationsaufwand. Das Mobilfunkendgerät kann Signale von allen Stationen auswerten, deren Signalqualität ausreicht, um die Signale zu dekodieren, unabhängig davon, zu welchem Basisstations-Controller, Frequenzband oder Mobilfunktelefonnetz oder zu welcher Sendeeinrichtung die Station gehört.

Vorteilhafterweise werden als laufzeitabhängige Messdaten auch Timing Advance-Werte erfasst, welche die Basisstationen in einem GSM-Mobilfunktelefonnetz nach dem Einbuchen eines Mobilfunktelefons aussenden.

Vorteilhafterweise werden einer oder mehrere der nachfolgend aufgeführten Verfahrensschritte in der SIM-Karte ausgeführt: Entgegennahme einer Anweisung zur Positionsbestimmung, Erfassen von Stationsidentifikationsdaten, Erfassen von laufzeitabhängigen Messdaten, Anfordern von Standortkoordinaten der Basisstationen, Entgegennahme von Standortkoordinaten der Basisstationen, Bestimmung einer Näherung für die Position des Mobilfunkendgerätes auf Grund von laufzeitabhängigen Messdaten und auf Grund von Standortkoordinaten der Basisstationen, und Weitergabe der Näherung für die Position. Die Ausführung von mindestens einem Teil der oben erwähnten Verfahrensschritte auf der SIM-Karte hat den Vorteil, dass ein bestehendes Mobilfunkendgerät auf einfache Weise durch Wechsel der SIM-Karte mit der entsprechenden Funktionalität ausgestattet und an die neuesten Entwicklungen auf dem Gebiet der ortsabhängigen Dienstleistungen angepasst werden kann.

Vorteilhafterweise wird für Berechnungen im Zusammenhang mit der Bestimmung einer Näherung für die Position ein programmierbarer Gate-Array verwendet. Dies ist insbesondere dann von Bedeutung, wenn die Rechenleistung des eingesetzten Prozessors für die Bestimmung der Näherung nicht ausreicht.

Vorteilhafterweise wird für Berechnungen im Zusammenhang mit der Bestimmung einer Näherung für die Position eine Verknüpfung mit einem Mobile Station Application Execution Environment (MExE) hergestellt. Betreffend MExE siehe GSM-Spezifikation GSM 03.57 Version 7.2.0. Dies ist insbesondere dann von Bedeutung, wenn die Rechenleistung des eingesetzten Prozessors für die Bestimmung der Näherung nicht ausreicht.

Vorteilhafterweise übermittelt im Falle, dass sich das Mobilfunkendgerät und/oder der Mobilfunkteilnehmer nicht in seinem Heimmobilfunktelefonnetz befindet, die ortsabhängige Dienstleistungsapplikation eine Anweisung zur Positionsbestimmung direkt oder via ein Positionsbestimmungs-Gateway, welches die Anweisung von der ortsabhängigen Dienstleistungsapplikation entgegennimmt, an ein Positionsbestimmungszentrum, welches Positionsbestimmungen im Bereich des Mobile Switching Centre (MSC), wo das Mobilfunkendgerät und/oder der Mobilfunkteilnehmer eingebucht sind, koordiniert, wobei im Home Location Register des genannten Heimmobilfunktelefonnetzes festgestellt wird, in welchem Mobilfunktelefonnetz und in welchem MSC das Mobilfunkendgerät und/oder der Mobilfunkteilnehmer eingebucht sind. Bei dem oben erwähnten Positionsbestimmungszentrum kann es sich z.B. um ein Mobile Location Centre (MLC) gemäss GSM-Spezifikation GSM 03.71 Version 7.0.0 handeln.

Vorteilhafterweise wird beim Aufruf der ortsabhängigen Dienstleistungsapplikation zusätzlich zum Aufruf eine Roaming-Nummer übermittelt. Erfolgt der Aufruf beispielsweise von einem Mobilfunkendgerät aus, so kann das MSC, in welchem das Mobilfunkendgerät eingebucht ist, zusätzlich eine Roaming-Nummer übermitteln, mittels welcher das aufrufende Mobilfunkendgerät direkt kontaktiert werden kann.

Vorteilhafterweise übermittelt die ortsabhängige Dienstleistungsapplikation eine Anweisung zur Positionsbestimmung und/oder einen Auftrag für eine ortsabhängige Dienstleistung über ein Telekommunikationsnetz, z.B. über das Internet, Internet Mobile oder über Mobilfunktelefonnetze oder über ein intelligentes Netz (Intelligent Network, IN) oder über ein Signalisierungssystem wie beispielsweise das SS7-Netz (CCITT Signaling System No. 7), an eine ortsabhängige Dienstleistungsapplikation und/oder an ein Positionsbestimmungs-Gateway und/oder an ein Positionsbestimmungszentrum im Bereich des MSC, wo das Mobilfunkendgerät und/oder der Mobilfunkteilnehmer eingebucht sind.

In einer vorteilhaften Ausführungsform wird die ortsabhängige Dienstleistungsapplikation vom Mobilfunkendgerät und/oder von der SIM-Karte aus aufgerufen.

In einer weiteren vorteilhaften Ausführungsform befindet sich die ortsabhängige Dienstleistungsapplikation im Mobilfunkendgerät und/oder auf der SIM-Karte.

Die Ausführungsbeispiele zur vorliegenden Erfindung werden anhand der folgenden Figuren näher beschrieben:

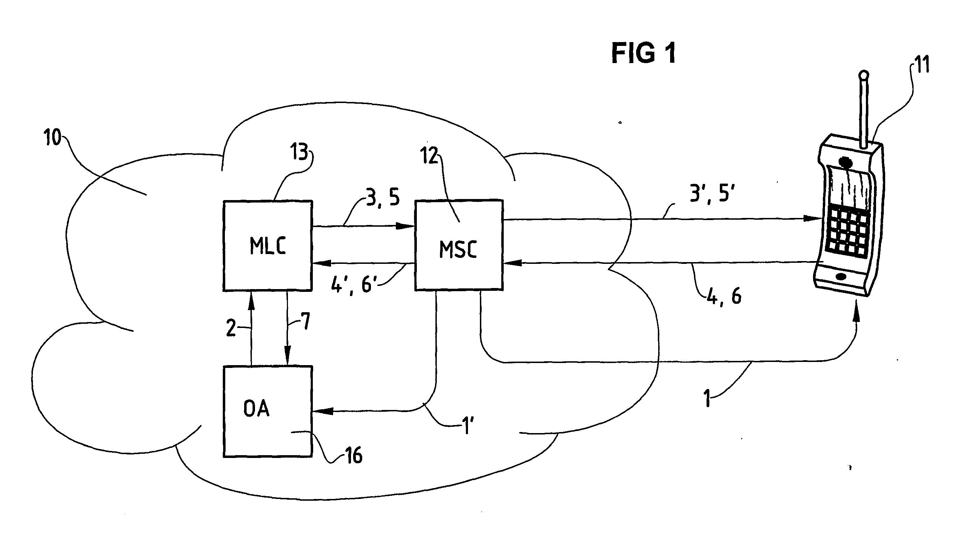

Fig. 1 zeigt ein Blockdiagramm eines ersten Ausführungsbeispiels, in welchem eine ortsabhängige Dienstleistungsapplikation eine Anweisung zur Positionsbestimmung an ein Mobilfunkendgerät übermittelt, und sich sowohl die ortsabhängige Dienstleistungsapplikation als auch das Mobilfunkendgerät im Heimmobilfunktelefonnetz befindet.

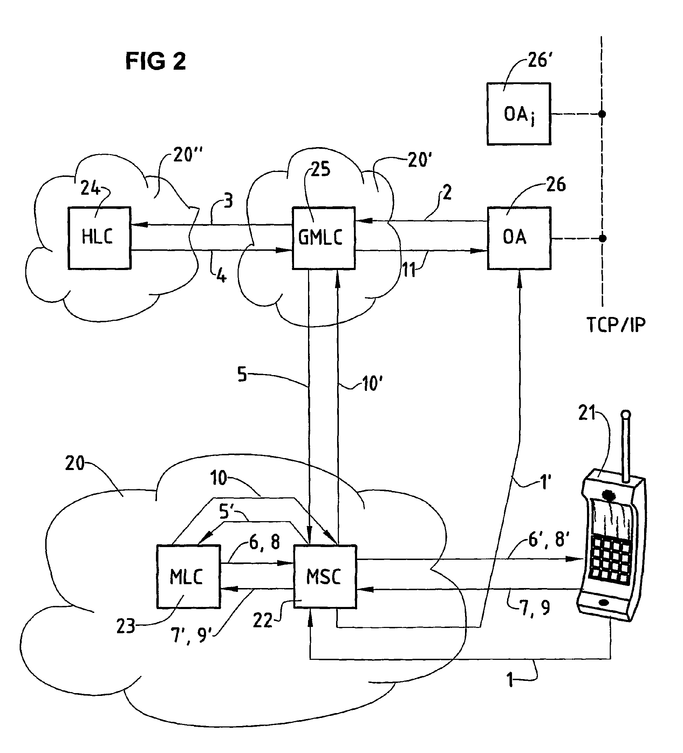

Fig. 2 zeigt ein Blockdiagramm eines zweiten Ausführungsbeispiels, in welchem eine ortsabhängige Dienstleistungsapplikation eine Anweisung zur Positionsbestimmung an ein Mobilfunkendgerät übermittelt, und sich weder die ortsabhängige Dienstleistungsapplikation noch das Mobilfunkendgerät im Heimmobilfunktelefonnetz befindet.

Wenn in der folgenden Beschreibung eines Beispiels des erfindungsgemässen Verfahrens und Systems zur Ausführung von ortsabhängigen Dienstleistungsapplikationen für Mobilfunkendgeräte die Mobilfunkteilnehmer nur ausnahmsweise erwähnt werden, so geschieht dies lediglich, um die Beschreibung zu vereinfachen. Selbstverständlich können sich ortsabhängige Dienstleistungsapplikationen und Positionsbestimmungen sowohl auf Mobilfunkendgeräte als auch auf Mobilfunkteilnehmer beziehen. Es soll deshalb betont werden, dass wenn in der folgenden Beschreibung der Begriff 'Mobilfunkendgerät' verwendet wird, wo sinnvoll immer auch die Lesart 'Mobilfunkteilnehmer und/oder Mobilfunkendgerät' gemeint ist.

Fig. 1 illustriert in schematischer Weise den prinzipiellen Aufbau des Systems gemäss dem ersten Ausführungsbeispiel zur vorliegenden Erfindung. Die nachfolgende Beschreibung des Ausführungsbeispiels verwendet im Wesentlichen die Komponentenbezeichnungen aus der GSM-Spezifikation GSM 03.71 Version 7.0.0 (ETSI-Sekretariat, Fr-06921 Sophia Antipolis Cedex-France). Die Bezugsziffer 10 bezeichnet ein GSM-Mobilfunktelefonnetz, welches ein Mobile Switching Centre (MSC) 12, ein Mobile Location Centre (MLC) 13 und eine ortsabhängige Dienstleistungsapplikation (OA) 16 umfasst. Ein Mobilfunkendgerät 11 steht in Verbindung mit dem Mobilfunktelefonnetz 10. In den Verfahrensschritten 1 und 1' übermittelt das Mobilfunkendgerät 11 einen Aufruf an die ortsabhängige Dienstleistungsapplikation 16. Dies kann durch einfache Wahl einer Rufnummer der ortsabhängigen Dienstleistungsapplikation 16 geschehen, oder über eine Gesprächsverbindung oder eine Datenverbindung z.B. unter Benützung von GPRS-Diensten (General Packet Radio Services), über WAP (Wireless Application Protocol) oder mittels SMS (Short Message Services)- oder USSD (Unstructured Supplementary Services Data)-Meldungen. Zusätzlich zum Aufruf wird die Rufnummer (MSISDN) des aufrufenden Mobilfunkendgerätes 11 übermittelt, beispielsweise indem die Rufnummer manuell oder verbal eingegeben wird, oder das Mobilfunkendgerät 11 die Rufnummer automatisch anfügt, oder indem die automatische Anrufererkennung eingesetzt wird. Die ortsabhängige Dienstleistungsapplikation 16 prüft die Berechtigung des Aufrufenden und bestimmt die benötigte Genauigkeit der Positionsbestimmung. Im Verfahrensschritt 2 übermittelt die ortsabhängige Dienstleistungsapplikation 16 eine Anweisung zur Positionsbestimmung an das Mobile Location Centre 13, von wo die Anweisung in den Verfahrensschritten 3 und 3' via das Mobile Switching Centre 12 an das Mobilfunkendgerät 11 übermittelt wird. Auf Grund der Anweisung zur Positionsbestimmung erfasst und/oder ermittelt das Mobilfunkendgerät 11 Stationsidentifikationsdaten und laufzeitabhängige Messdaten von verschiedenen, nicht ortsgleichen Basisstationen. Im einfachsten Fall genügen die laufzeitabhängigen Messdaten von zwei Basisstationen, um daraus mit Hilfe der Standortkoordination der betreffenden Basisstationen eine grobe Näherung für die Position des Mobilfunkendgerätes 11 zu berechnen: Als erster laufzeitabhängiger Messwert für die Positionsbestimmung dient dabei der Timing Advance-Wert, welchen die Basisstation, mit welcher das Mobilfunkendgerät 11 in Verbindung steht, standardmässig misst und übermittelt. Die Timing Advance-Werte dienen in GSM-Mobilfunktelefonnetzen dazu, die Signallaufzeiten, welche durch die unterschiedlichen Entfernungen zwischen Mobilfunkendgeräten und Basisstationen entstehen, auszugleichen. Falls die Basisstationen in der Umgebung des Mobilfunkendgerätes 11 synchronisiert sind, braucht das Mobilfunkendgerät 11 lediglich die Signale einer zusätzlichen Basisstation zu empfangen und zu dekodieren. Dem dekodierten Signal können dann die Stationsidentifikationsdaten entnommen werden. Für die Dekodierung ist es notwendig, das empfangene Signal mit der Empfängeruhr zu synchronisieren, womit man, wenn man die Zeitverschiebung zwischen dem empfangenen Signal und der Empfängeruhr erfasst, einen laufzeitabhängigen Messwert erhält. In den Verfahrensschritten 4 und 4' übermittelt das Mobilfunkendgerät 11 eine Anweisung zur Lieferung von Standortkoordinaten der erfassten Basisstationen an das Mobile Location Centre 13, welches in den Verfahrensschritten 5 und 5' die gewünschten Standortkoordinaten an das Mobilfunkendgerät 11 übermittelt. Im Mobilfunkendgerät 11 wird auf Grund des Timing Advance-Wertes und des zusätzlichen laufzeitabhängigen Messwertes und auf Grund der Standortkoordinaten der Basisstationen eine Näherung für die Position des Mobilfunkendgerätes 11 berechnet. Die berechnete Näherung wird in den Verfahrensschritten 6 und 6' via das Mobile Switching Centre 12 an das Mobile Location Centre 13 übermittelt, und von diesem im Verfahrensschritt 7 an die ortsabhängige Dienstleistungsapplikation 16 weitergegeben, wo die Näherung anschliessend für die Ausführung der Applikation zur Verfügung steht.

Die auf diese Weise auf Grund von Messungen von nur zwei Basisstationen ermittelte Näherung für die Position des Mobilfunkendgerätes 11 ist nur eine grobe Näherung. Zur Erzielung einer besseren Genauigkeit ist es vorteilhaft, Messungen von mehr als zwei Basisstationen auszuwerten. Der oben beschriebene Verfahrensablauf kann in einfacher Weise an Positionsbestimmungen angepasst werden, welche laufzeitabhängige Messdaten von mehr als zwei Basisstationen auswerten. Insbesondere muss auch die Berechnung einer Näherung für die Position des Mobilfunkendgerätes 11 angepasst werden, wenn mehr Messungen einbezogen werden. Entsprechende Triangulationsverfahren gehören jedoch zum Stand der Technik.

Für die Messung von laufzeitabhängigen Messwerten im Mobilfunkendgerät 11 und die nachfolgende Positionsbestimmung gibt es verschiedene Verfahren. Aus dem Stand der Technik ist z.B. die Enhanced Observed Time Difference (E-OTD)-Methode bekannt, welche die Laufzeitunterschiede zu mindestens drei nicht ortsgleichen Basisstationen auswertet. In einer weiteren vorteilhaften Ausführungsform gemäss der vorliegenden Erfindung werden die Stationsidentifikationsdaten und die laufzeitabhängigen Messwerte aus den Handover-Messungen ermittelt, welche im Mobilfunkendgerät 11 standardmässig durchgeführt werden. Betreffend Handover-Messungen siehe GSM-Spezifikation GSM 05.08 Version 5.9.1. Die Handover-Messungen dienen in erster Linie dazu, die Signalqualität der umliegenden Basisstationen zu ermitteln. Um eindeutig festzustellen, von welchen Basisstationen die empfangenen Signale stammen, müssen die Signale gemäss Spezifikation im Mobilfunkendgerät 11 dekodiert werden, und die Basisstationen auf Grund des Base Station Identity Code (BSIC) und der Frequenz identifiziert werden. Für die Dekodierung der Signale ist eine Synchronisation der Signale mit der Empfängeruhr notwendig, woraus, wie bereits oben erwähnt, laufzeitabhängige Messdaten abgeleitet werden können. Die Ermittlung der Stationsidentifikationsdaten und der laufzeitabhängigen Messwerte aus den Handover-Messungen hat verschiedene Vorteile, da die Handover-Messungen im Hintergrund ablaufen, ohne dass die laufende Verbindung unterbrochen werden muss. Sollten die in den Handover-Messungen erfassten Basisstationen nicht ausreichen, um die gewünschte Positionsgenauigkeit zu erreichen, so können zusätzliche Basisstationen im Empfangsbereich des Mobilfunkendgerätes 11 in die Messungen einbezogen werden. Eine Messung der Signalqualität ist für die zusätzlichen Basisstationen selbstverständlich nicht notwendig.

In der obigen Beschreibung des ersten Ausführungsbeispiels wurde davon ausgegangen, dass die erfassten Basisstationen untereinander synchronisiert sind, d.h. dass die Signale von allen Basisstationen genau zum selben Zeitpunkt ausgesendet werden. Falls die Basisstationen untereinander nicht synchronisiert sind, was z.B. der Fall sein kann, wenn die Basisstationen zu verschiedenen Basisstations-Controllern oder zu verschiedenen Mobilfunktelefonnetzen gehören, so werden für die Positionsbestimmung zusätzlich Zeitmessungen der einzelnen Basisstationsuhren benötigt, aus welchen die Abweichungen der Basisstationsuhren untereinander oder bezüglich einer gemeinsamen Referenz, wie beispielsweise der Global Positioning System (GPS)-Uhr, hervorgehen. Falls die Basisstationen untereinander nicht synchronisiert sind, sind die Verfahrensschritte 5 und 5' in der obigen Beschreibung derart zu ergänzen, dass das Mobile Location Centre 13 zusätzlich zu den Standortkoordinaten auch die Abweichungen der Basisstationsuhren der erfassten Basisstationen an das Mobilfunkendgerät 11 übermittelt. Die Abweichungen der betreffenden Basisstationsuhren können vom Mobile Location Centre 13 z.B. aus Messungen einer Location Measurement Unit (LMU) ermittelt werden. Die Location Measurement Units sind Empfangseinrichtungen mit bekanntem Standort, welche in einem GSM-Mobilfunktelefonnetz dafür vorgesehen sind, Messungen im Rahmen von Positionsbestimmungen durchzuführen. Betreffend Location Measurement Units siehe GSM-Spezifikation GSM 03.71 Version 7.0.0.

Die nachfolgende Beschreibung des zweiten Ausführungsbeispiels nimmt Bezug auf Fig. 2. Das System gemäss dem zweiten Ausführungsbeispiel umfasst drei GSM-Mobilfunktelefonnetze 20, 20' und 20", ein Mobilfunkendgerät 21 sowie eine externe ortsabhängige Dienstleistungsapplikation (OA) 26. Das Mobilfunktelefonnetz 20 umfasst ein Mobile Switching Centre (MSC) 22 und ein Mobile Location Centre (MLC) 23, wobei sich das Mobilfunkendgerät 21 nur besuchsweise im Mobilfunktelefonnetz 20 befindet. Das Mobilfunkendgerät 21 ist in einem Home Location Register (HLR) 24 des Heimmobilfunktelefonnetzes 20" registriert. Die ortsabhängige Dienstleistungsapplikation 26 ist über eine Telekommunikationsverbindung, beispielsweise über ein Festnetz, Mobilfunktelefonnetz oder über das Internet mit einem Positionsbestimmungs-Gateway (englische Abkürzung GMLC) 25 verbunden, welcher sich im Mobilfunktelefonnetz 20' befindet. In den Verfahrensschritten 1 und 1' übermittelt das Mobilfunkendgerät 21 einen Aufruf an die ortsabhängige Dienstleistungsapplikation 26. Dies kann durch einfache Wahl einer Rufnummer der ortsabhängige Dienstleistungsapplikation 26 geschehen, oder über eine Gesprächsverbindung oder eine Datenverbindung z.B. unter Benützung von GPRS-Diensten (General Packet Radio Services), über WAP (Wireless Application Protocol) oder mittels SMS (Short Message Services)- oder USSD (Unstructured Supplementary Services Data)-Meldungen. Zusätzlich zum Aufruf wird die Rufnummer (MSISDN) des aufrufenden Mobilfunkendgerätes 21 übermittelt, beispielsweise indem die Rufnummer manuell oder verbal eingegeben wird, oder das Mobilfunkendgerät 21 die Rufnummer automatisch anfügt, oder indem die automatische Anrufererkennung eingesetzt wird. In einer Ausführungsvariante übermittelt das Mobile Switching Centre 22 im Verfahrensschritt 1' zusätzlich eine Roaming-Nummer, welche eine direkte Verbindung zum Mobilfunkendgerät 21 ermöglicht. Selbstverständlich ist es auch möglich, die ortsabhängige Dienstleistungsapplikation 26 von einem anderen Mobilfunkendgerät oder einer andern Stelle aus aufzurufen, wobei in diesem Fall nicht nur die Adresse oder Rufnummer des aufrufenden Mobilfunkendgerätes oder der aufrufenden Stelle, sonder auch die Rufnummer des Mobilfunkteilnehmers und/oder Mobilfunkendgerätes übermittelt werden muss, deren Position im Rahmen der ortsabhängigen Dienstleistungsapplikation bestimmt werden soll. Die ortsabhängige Dienstleistungsapplikation 26 prüft die Berechtigung des Aufrufenden und bestimmt die benötigte Genauigkeit der Positionsbestimmung. Im Verfahrensschritt 2 übermittelt die ortsabhängige Dienstleistungsapplikation 26 eine Anweisung zur Positionsbestimmung an das Positionsbestimmungs-Gateway 25. Nach Überprüfung der Berechtigung der ortsabhängigen Dienstleistungsapplikation 26 übermittelt das Positionsbestimmungs-Gateway 25 im Verfahrensschritt 3 eine Anfrage an das Home Location Register 24, um die Adresse des Mobile Swichting Centre 22 festzustellen, in welchem das Mobilfunkendgerät 21 eingebucht ist. Im Verfahrensschritt 4 übermittelt das Home Location Register 24 die gewünschte Adresse des Mobile Switching Centre 22 an das Positionsbestimmungs-Gateway 25. Falls in einer Ausführungsvariante zusammen mit der Anweisung zur Positionsbestimmung eine Roaming-Nummer für das Mobilfunkendgerät 21 übermittelt wurde, können die Schritte 3 und 4 auch entfallen. Das Positionsbestimmungs-Gateway 25 übermittelt in den Verfahrensschritten 5 und 5' die Anweisung zur Positionsbestimmung via das Mobile Switching Centre 22 an das Mobile Location Centre 23. In den Verfahrensschritten 6 und 6' übermittelt das Mobile Location Centre 23 die Anweisung zur Positionsbestimmung weiter an das Mobilfunkendgerät 21. Das Mobilfunkendgerät 21 erfasst und/oder ermittelt in der Folge Stationsidentifikationsdaten und laufzeitabhängige Messdaten von verschiedenen, nicht ortsgleichen Basisstationen. Das Erfassen und Ermitteln der Stationsidentifikationsdaten und laufzeitabhängige Messdaten im Mobilfunkendgerät 21 wurde im Rahmen des ersten Ausführungsbeispiels näher beschrieben, so dass im Folgenden auf eine Wiederholung dieses Verfahrensabschnittes verzichtet wird. Zusätzliche Angaben zu den folgenden Verfahrensschritten findet man ebenfalls unter dem ersten Ausführungsbeispiel. In den Verfahrensschritten 7 und 7' übermittelt das Mobilfunkendgerät 21 eine Anweisung zur Lieferung von Standortkoordinaten der erfassten Basisstationen an das Mobile Location Centre 23, welches in den Verfahrensschritten 8 und 8' die gewünschten Standortkoordinaten an das Mobilfunkendgerät 21 übermittelt. Im Mobilfunkendgerät 21 wird auf Grund der laufzeitabhängigen Messwerte und auf Grund der Standortkoordinaten der Basisstationen eine Näherung für die Position des Mobilfunkendgerätes 21 berechnet, und die berechnete Näherung in den Verfahrensschritten 9 und 9' an das Mobile Location Centre 23 übermittelt. Das Mobile Location Centre 23 übermittelt die berechnete Näherung in den Verfahrensschritten 10 und 10' via das Mobile Switching Centre 22 weiter an das Positionsbestimmungs-Gateway 25, welches die berechnete Näherung im Verfahrensschritt 11 an die ortsabhängige Dienstleistungsapplikation 26 weiterleitet, wo die Näherung anschliessend für die Ausführung der Applikation zur Verfügung steht.

In einer Ausführungsvariante zum obigen Ausführungsbeispiel, werden die Verfahrensschritte 7, 7', 8 und 8' dahingehend angepasst, dass in der Anweisung zur Lieferung von Standortkoordinaten die erfassten Basisstationen nicht näher spezifiziert werden, und die nachfolgende Übermittlung auch Standortkoordinaten von weiteren Basisstationen im Empfangsbereich des Mobilfunkendgerätes 21 umfasst. Das ist insbesondere dann interessant, wenn der Empfangsbereich des Mobilfunkendgerätes 21 nur wenige Basisstationen umfasst.

In einer weiteren Ausführungsvariante zum obigen Ausführungsbeispiel werden die Verfahrensschritte 7, 7', 8 und 8' weggelassen, und mit der Anweisung zur Positionsbestimmung in den Verfahrensschritten 6 und 6' auch Standortkoordinaten der umliegenden Basisstationen übermittelt.

In einer weiteren vorteilhaften Ausführungsform werden einer oder mehrere der nachfolgend aufgeführten Verfahrensschritte in der SIM-Karte ausgeführt, beispielsweise durch programmierte Software-Funktionen: Entgegennahme einer Anweisung zur Positionsbestimmung, Erfassen von Stationsidentifikationsdaten, Erfassen von laufzeitabhängigen Messdaten, Anfordern von Standortkoordinaten von Basisstationen, Entgegennahme von Standortkoordinaten der Basisstationen, Bestimmung einer Näherung für die Position des Mobilfunkendgerätes auf Grund von laufzeitabhängigen Messdaten und auf Grund von Standortkoordinaten der Basisstationen, und Weitergabe der Näherung für die Position. Für den Fachmann ist es unschwer möglich, die entsprechenden Funktionen auch auf der SIM-Karte zu implementieren. Wenn die Rechenleistung des eingesetzten Prozessors für die Bestimmung der Näherung nicht ausreicht, kann in einer Ausführungsvariante für Berechnungen im Zusammenhang mit der Bestimmung der Näherung ein programmierbarer Gate-Array verwendet werden oder eine Verknüpfung mit einem Mobile Station Application Execution Environment (MExE) eingesetzt werden. Betreffend MExE siehe GSM-Spezifikation GSM 03.57 Version 7.2.0. Die Implementierung von einer oder mehreren der oben angeführten Funktionen auf der SIM-Karte hat den Vorteil, dass ein bestehendes Mobilfunkendgerät in einfacher Weise durch Wechsel der SIM-Karte mit der entsprechenden Funktionalität ausgestattet werden kann.

## Patentansprüche

1. Verfahren zur Ausführung einer ortsabhängigen Dienstleistungsapplikation (26) für Mobilfunkteilnehmer und/oder Mobilfunkendgeräte, in welchem Verfahren die ortsabhängige Dienstleistungsapplikation (26) eine Anweisung zur Positionsbestimmung an ein Mobilfunkendgerät (21) übergibt und/oder übermittelt; in welchem Verfahren Stationsidentifikationsdaten und laufzeitabhängige Messdaten von mindestens zwei nicht ortsgleichen Basisstationen im Mobilfunkendgerät (21) erfasst und/oder ermittelt werden, wobei die laufzeitabhängigen Messdaten von den Distanzen zwischen den einzelnen Basisstationen und dem Mobilfunkendgerät (21) abhängen; in welchem Verfahren im Mobilfunkendgerät (21) auf Grund der genannten laufzeitabhängigen Messdaten und auf Grund von Standortkoordinaten der genannten Basisstationen eine Näherung für die Position des Mobilfunkendgerätes (21) berechnet wird; und in welchem Verfahren die berechnete Näherung für die Position des Mobilfunkendgerätes (21) vom Mobilfunkendgerät (21) an die ortsabhängige Dienstleistungsapplikation (26) zurückgegeben und/oder übermittelt wird, **dadurch gekennzeichnet,**
**dass** die Stationsidentifikationsdaten, welche die genannten Basisstationen kennzeichnen, vom Mobilfunkendgerät (21) an mindestens ein Standortinformationszentrum übermittelt werden,
**dass** die Standortkoordinaten der genannten Basisstationen von dem mindestens einen Standortinformationszentrum an das Mobilfunkendgerät (21) übermittelt werden, und
**dass** mindestens ein Teil der genannten Stationsidentifikationsdaten und mindestens ein Teil der genannten laufzeitabhängigen Messdaten aus Messungen ermittelt werden, wie sie im Rahmen des Handover-Prozesses im Mobilfunkendgerät durchgeführt werden.

2. Verfahren nach Anspruch 1, in welchem die genannten Basisstationen zu einem oder mehreren Basisstations-Controllern und/oder einem oder mehreren Mobilfunktelefonnetzen (20) gehören.

3. Verfahren nach einem der Ansprüche 1 oder 2, in welchem als laufzeitabhängige Messdaten Timing Advance-Werte erfasst werden, welche von den Basisstationen übermittelt werden.

4. Verfahren nach einem der Ansprüche 1 bis 3, in welchem einer oder mehrere der nachfolgend aufgeführten Verfahrensschritte in der SIM-Karte ausgeführt werden: Entgegennahme einer Anweisung zur Positionsbestimmung, Erfassen von Stationsidentifikationsdaten, Erfassen von laufzeitabhängigen Messdaten, Anfordern von Standortkoordinaten von Basisstationen, Entgegennahme von Standortkoordinaten der Basisstationen, Bestimmung einer Näherung für die Position des Mobilfunkendgerätes auf Grund von laufzeitabhängigen Messdaten und auf Grund von Standortkoordinaten der Basisstationen, und Weitergabe der Näherung für die Position.

5. Verfahren nach einem der Ansprüche 1 bis 4, in welchem für Berechnungen im Zusammenhang mit der Bestimmung einer Näherung für die Position ein programmierbarer Gate-Array verwendet wird.

6. Verfahren nach einem der Ansprüche 1 bis 5, in welchem für Berechnungen im Zusammenhang mit der Bestimmung einer Näherung für die Position eine Verknüpfung mit einem Mobile Station Application Execution Environment (MExE) eingesetzt wird.

7. Verfahren nach einem der Ansprüche 1 bis 6, wobei sich das Mobilfunkendgerät (21) und/oder der Mobilfunkteilnehmer nicht in seinem Heimmobilfunktelefonnetz (20") befindet, **gekennzeichnet dadurch, dass** die ortsabhängige Dienstleistungsapplikation (26) eine Anweisung zur Positionsbestimmung direkt oder via ein Positionsbestimmungs-Gateway (25) an ein Positionsbestimmungszentrum (23) im Bereich des Mobile Switching Centre (MSC) (22) übermittelt, wo das Mobiifunkendgerät (21) und/oder der Mobilfunkteilnehmer eingebucht sind, wobei im Home Location Register (24) des genannten Heimmobilfunktelefonnetzes (20") festgestellt wird, in weichem Mobilfunktelefonnetz (20) und in welchem MSC (22) das Mobilfunkendgerät (21) und/oder der Mobilfunkteilnehmer eingebucht sind.

8. Verfahren nach einem der Ansprüche 1 bis 7, in welchem beim Aufruf der ortsabhängigen Dienstleistungsapplikation (26) zusätzlich zum Aufruf eine Roaming-Nummer übermittelt wird.

9. Verfahren nach einem der Ansprüche 1 bis 8, **gekennzeichnet dadurch, dass** die ortsabhängige Dienstleistungsapplikation (26) eine Anweisung zur Positionsbestimmung und/oder einen Auftrag für eine ortsabhängige Dienstleistung über das Internet und/oder Internet Mobile an eine ortsabhängige Dienstleistungsapplikation (26') und/oder an ein Positionsbestimmungszentrum (23) im Bereich des MSC (22) weitergibt, wo das Mobilfunkendgerät (21) und/oder der Mobüfunkteilnehmer eingebucht sind.

10. Verfahren nach einem der Ansprüche 1 bis 9, in welchem die ortsabhängige Dienstleistungsapplikation (26) vom Mobilfunkendgerät (21) und/oder von der SIM-Karte aus aufgerufen wird.

11. Verfahren nach einem der Ansprüche 1 bis 10, in welchem sich die ortsabhängige Dienstleistungsapplikation (26) im Mobilfunkendgerät (21) und/oder auf der SIM-Karte befindet.

12. System zur Ausführung einer ortsabhängigen Dienstleistungsapplikation (26) für Mobilfunkteilnehmer und/oder Mobilfunkendgeräte, welches System mindestens ein Mobilfunktelefonnetz (20) und ein Mobilfunkendgerät (21) sowie die ortsabhängige Dienstleistungsapplikation (26) umfasst, welche eine Anweisung zur Positionsbestimmung an das Mobilfunkendgerät (21) übergibt und/oder übermittelt; welches Mobilfunkendgerät (21) Mittel umfasst, um Stationsidentifikationsdaten und laufzeitabhängige Messdaten von mindestens zwei nicht ortsgleichen Basisstationen zu erfassen und/oder zu ermitteln, welche laufzeitabhängigen Messdaten von den Distanzen zwischen den einzelnen Basisstationen und dem Mobilfunkendgerät (21) abhängen; welches Mobilfunkendgerät (21) zusätzlich Mittel umfasst, um auf Grund der genannten laufzeitabhängigen Messdaten und auf Grund von Standortkoordinaten der genannten Basisstationen eine Näherung für die Position des Mobilfunkendgerätes (21) zu berechnen; und welches System weitere Mittel umfasst, um die berechnete Näherung für die Position des Mobilfunkendgerätes (21) an die ortsabhängige Dienstleistungsapplikation (26) weiterzugeben und/oder zu übermitteln, **dadurch gekennzeichnet,**
**dass** das System Mittel umfasst, um von mindestens einem Standortinformationszentrum Standortkoordinaten der genannten Basisstationen anzufordern; um die Stationsidentifikationsdaten, welche die genannten Basisstationen kennzeichnen, vom Mobilfunkendgerät (21) an das mindestens eine Standortinformationszentrum zu übermitteln; um die Standortkoordinaten der genannten Basisstationen in dem mindestens einen Standortinformationszentrum bereitzustellen; und um die Standortkoordinaten der genannten Basisstationen von dem mindestens einen Standortinformationszentrum an das Mobilfunkendgerät (21) zu übermitteln, und
**dass** das Mobilfunkendgerät (21) Mittel umfasst, um mindestens einen Teil der genannten Stationsidentifikationsdaten und mindestens einen Teil der genannten laufzeitabhängigen Messdaten aus Messungen zu ermitteln, wie sie im Rahmen des Handover-Prozesses im Mobilfunkendgerät (21) durchgeführt werden.

13. System nach Anspruch 12, **dadurch gekennzeichnet, dass** das System einen oder mehrere Basisstations-Controller und/oder ein oder mehrere Mobilfunktelefonnetze (20) umfasst, zu welchen Basisstations-Controllern und/oder Mobilfunktelefonnetzen (20) die Basisstationen gehören.

14. System nach einem der Ansprüche 12 oder 13, **dadurch gekennzeichnet, dass** eine oder mehrere Basisstationen Mittel umfassen, um Timing Advance-Werte zu bestimmen und an das Mobilfunkendgerät (21) zu übermitteln, und dass das Mobilfunkendgerät (21) Mittel umfasst, um die Timing Advance-Werte als laufzeitabhängige Messdaten zu erfassen.

15. System nach einem der Ansprüche 12 bis 14, **dadurch gekennzeichnet, dass** das System ein Mobilfunkendgerät (21) mit SIM-Karte enthält, wobei die SIM-Karte Mittel zur Ausführung einer oder mehrerer der nachfolgend aufgeführten Funktionen umfasst: Entgegennahme einer Anweisung zur Positionsbestimmung, Erfassen von Stationsidentifikationsdaten, Erfassen von laufzeitabhängigen Messdaten, Anfordern von Standortkoordinaten von Basisstationen, Entgegennahme von Standortkoordinaten der Basisstationen, Bestimmung einer Näherung für die Position des Mobilfunkendgerätes auf Grund von laufzeitabhängigen Messdaten und auf Grund von Standortkoordinaten der Basisstationen, und Weitergabe der Näherung für die Position.

16. System nach einem der Ansprüche 12 bis 15, in welchem das Mobüfunkendgerät (21) und/oder die SIM-Karte zur Durchführung von Berechnungen im Zusammenhang mit der Bestimmung einer Näherung für die Position einen programmierbaren Gate-Array enthält.

17. System nach einem der Ansprüche 12 bis 16, in welchem das System ein Mobile Station Application Execution Environment (MExE) umfasst, und das Mobilfunkendgerät (21) und/oder die SIM-Karte Mittel umfasst, um für Berechnungen im Zusammenhang mit der Bestimmung einer Näherung für die Position eine Verknüpfung mit MExE herzustellen.

18. System nach einem der Ansprüche 12 bis 17, **gekennzeichnet dadurch, dass** das System die ortsabhängige Dienstleistungsapplikation (26) sowie Übermittlungsmittel umfasst, um im Falle, dass sich das Mobilfunkendgerät (21) und/oder der Mobilfunkteilnehmer nicht in seinem Heimmobilfunktelefonnetz (20") befindet, eine Anweisung zur Positionsbestimmung direkt oder via ein Positionsbestimmungs-Gateway (25) an ein Positionsbestimmungszentrum (23) im Bereich des Mobile Switching Centre (MSC) (22) zu übermitteln, wo das Mobilfunkendgerät (21) und/oder der Mobiffunkteilnehrner eingebucht sind, und um im Home Location Register (24) des genannten Heimmobilfunktelefonnetzes (20") festzustellen, in welchem Mobilfunktelefonnetz (20) und in welchem MSC (22) das Mobilfunkendgerät (21) und/oder der Mobilfunkteilnehmer eingebucht sind.

19. System nach einem der Ansprüche 12 bis 18, **dadurch gekennzeichnet, dass** das Mobilfunkendgerät (21) und/oder die SIM-Karte in einem Mobilfunktelefonnetz (20) eingebucht sind, welches Mittel enthält, um zusätzlich zum Aufruf eine Roaming-Nummer an die ortsabhängige Dienstleistungsapplikation (26) zu übermitteln.

20. System nach einem der Ansprüche 12 bis 19, **gekennzeichnet dadurch, dass** das System die ortsabhängige Dienstleistungsapplikation (26) sowie Übermittlungsmittel umfasst, um eine Anweisung zur Positions-bestimmung und/oder einen Auftrag für eine ortsabhängige Dienstleistung über das Internet und/oder Internet Mobile an eine ortsabhängige Dienstleistungsapplikation (26') und/oder an ein Positionsbestimmungszentrum (23) im Bereich des MSC (22) zu übermitteln, wo das Mobilfunkendgerät (21) und/oder der Mobilfunkteilnehmer eingebucht sind.

21. System nach einem der Ansprüche 12 bis 20, **dadurch gekennzeichnet, dass** das Mobilfunkendgerät (21) und/oder die SIM-Karte Mittel enthalten, um ortsabhängige Dienstleistungsapplikationen (26) aufzurufen.

22. System nach einem der Ansprüche 12 bis 21, **dadurch gekennzeichnet, dass** das Mobilfunkendgerät (21) und/oder die SIM-Karte mindestens eine ortsabhängige Dienstleistungsapplikation (26) enthalten.

## Claims

1. Method for carrying out a localised service application (26) for mobile subscribers and/or mobile radio terminals, in which method the localised service application (26) passes on and/or transmits an instruction for position determination to a mobile radio terminal (21); in which method station identification data and run-time-dependent measurement data of at least two base stations not having the same position are captured and/or determined in the mobile radio terminal (21), the run-time-dependent measurement data being dependent upon the distances between the individual base stations and the mobile radio terminal (21); in which method an approximation for the position of the mobile radio terminal (21) is calculated in the mobile radio terminal (21) on the basis of said run-time-dependent measurement data and on the basis of positional co-ordinates of said base stations; and in which method the calculated approximation for the position of the mobile radio terminal (21) is passed back and/or transmitted from the mobile radio terminal (21) to the localised service application (26), **characterised**
**in that** the station identification data which identify said base stations are transmitted from the mobile radio terminal (21) to at least one positional information centre,
**in that** the positional co-ordinates of said base stations are transmitted from the at least one positional information centre to the mobile radio terminal (21), and
**in that** at least a portion of said station identification data and at least a portion of said run-time-dependent measurement data are determined from measurements as are carried out in the mobile radio terminal within the framework of the handover process.

2. Method according to claim 1, wherein said base stations belong to one or more base station controllers and/or to one or more mobile radio telephone networks (20).

3. Method according to one of the claims 1 or 2, wherein timing advance values, which are transmitted from the base stations, are captured as run-time-dependent measurement data.

4. Method according to one of the claims 1 to 3, wherein one or more of the following mentioned steps of the method are carried out in the SIM card: receiving an instruction for position determination, capturing of station identification data, capturing of run-time-dependent measurement values, requesting positional co-ordinates of base stations, receiving positional co-ordinates of the base stations, determining an approximation of the position of the mobile radio terminal based on run-time-dependent measurement values and based on positional co-ordinates of the base stations, and passing on of the approximation of the position.

5. Method according to one of the claims 1 to 4, wherein a programmable gate array is used for calculations in connection with the determination of an approximation for the position.

6. Method according to one of the claims 1 to 5, wherein a link to a Mobile Station Application Execution Environment (MExE) is used for calculations in connection with the determination of an approximation for the position.

7. Method according to one of the claims 1 to 6, the mobile radio terminal (21) and/or the mobile subscriber not being in its/his home mobile radio network (20"), **characterised in that** the localised service application (26) transmits an instruction for position determination directly, or via a position determination gateway (25), to a position determination centre (23) in the area of the mobile switching centre (MSC) (22), where the mobile radio terminal (21) and/or the mobile subscriber are logged in, it being noted in the Home Location Register (24) of said home mobile radio telephone network (20"), in which mobile radio telephone network (20) and in which MSC (22) the mobile radio terminal (21) and/or the mobile subscriber are logged in.

8. Method according to one of the claims 1 to 7, wherein upon requesting of the localised service application, a roaming number is transmitted, in addition to the request.

9. Method according to one of the claims 1 to 8, **characterised in that** the localised service application (26) passes on an instruction for position determination and/or a request for a localised service via the Internet and/or Internet Mobile to a localised service application (26') and/or to a position determination centre (23) in the area of the MSC (22) where the mobile radio terminal (21) and/or the mobile subscriber are logged in.

10. Method according to one of the claims 1 to 9, wherein the localised service application (26) is invoked by the mobile radio terminal (21) and/or by the SIM card.

11. Method according to one of the claims 1 to 10, wherein the localised service application (26) is located in the mobile radio terminal (21) and/or on the SIM card.

12. System for carrying out a localised service application (26) for mobile subscribers and/or mobile radio terminals, which system comprises at least one mobile radio telephone network (20) and a mobile radio terminal (21) as well as the localised service application (26), which application passes on and/or transmits an instruction for position determination to the mobile radio terminal (21); which mobile radio terminal (21) comprises means of capturing and/or determining station identification data and run-time-dependent measurement data of at least two base stations not having the same location, which run-time-dependent measurement values depend on the distances between the individual base stations and the mobile radio terminal (21); which mobile radio terminal (21) further comprises means of calculating an approximation for the position of the mobile radio terminal (21) based on said run-time-dependent measurement values and based on positional co-ordinates of said base stations; and which system comprises further means for forwarding and/or transmitting to the localised service application (26) the calculated approximation for the position of the mobile radio terminal (21), **characterised**
**in that** the system comprises means of requesting from at least one positional information centre positional co-ordinates for said base stations; of transmitting the station identification data, identifying said base stations, from the mobile radio terminal (21) to the at least one positional information centre; of making available in the at least one positional information centre the positional co-ordinates of said base stations; and of transmitting the positional co-ordinates of said base stations from the at least one positional information centre to the mobile radio terminal (21), and
**in that** the mobile radio terminal (21) comprises means of determining at least a portion of said station identification data and at least a portion of said run-time-dependent measurement values from measurements as are carried out within the framework of the handover process in the mobile radio terminal (21).

13. System according to claim 12, **characterised in that** the system comprises one or more base station controllers and/or one or more mobile radio telephone networks (20), to which base station controllers and/or mobile radio telephone networks (20) the base stations belong.

14. System according to one of the claims 12 or 13, **characterised in that** one or more base stations comprise means of determining timing advance values and of transmitting them to the mobile radio terminal (21), and **in that** the mobile radio terminal (21) comprises means of capturing timing advance values as run-time-dependent measurement data.

15. System according to one of the claims 12 to 14, **characterised in that** the system contains a mobile radio terminal (21) with SIM card, the SIM card comprising means of executing one or more of the following mentioned functions: receiving an instruction for position determination, capturing of station identification data, capturing run-time-dependent measurement values, requesting positional co-ordinates of base stations, receiving positional co-ordinates of the base stations, determining an approximation for the position of the mobile radio terminal based on run-time-dependent measurement values and based on positional co-ordinates of the base stations, and forwarding of the approximation for the position.

16. System according to one of the claims 12 to 15, wherein the mobile radio terminal (21) and/or the SIM card contains a programmable gate array for carrying out calculations in connection with the determination of an approximation for the position.

17. System according to one of the claims 12 to 16, wherein the system comprises a Mobile Station Application Execution Environment (MExE), and the mobile radio terminal (21) and/or the SIM card comprises means for establishing a link with MExE for calculations in connection with the determination of an approximation for the position.

18. System according to one of the claims 12 to 17, **characterised in that** the system comprises the localised service application (26) as well as transmission means in order to transmit, in the event that the mobile radio terminal (21) and/or the mobile subscriber is not located in its/his home mobile radio telephone network (20"), an instruction for position determination directly, or via a position determination gateway (25), to a position determination centre (23) in the area of the mobile switching centre (MSC) (22), where the mobile radio terminal (21) and/or the mobile subscriber are logged in, and in order to determine in the home location register (24) of said home mobile radio telephone network (20"), in which mobile radio telephone network (20) and in which MSC (22) the mobile radio terminal (21) and/or the mobile subscriber are logged in.

19. System according to one of the claims 12 to 18, **characterised in that** the mobile radio terminal (21) and/or the SIM card are logged in a mobile radio telephone network (20) containing means of transmitting a roaming number to the localized service application (26), in addition to the request.

20. System according to one of the claims 12 to 19, **characterised in that** the system comprises the localised service application (26) as well as transmission means to transmit over the Internet and/or Internet Mobile to a localised service application (26') and/or a position determination centre (23) in the area of the MSC (22), where the mobile radio terminal (21) and/or the mobile subscriber are logged in, an instruction for position determination and/or a request for a localised service.

21. System according to one of the claims 12 to 20, **characterised in that** the mobile radio terminal (21) and/or the SIM card contain means of invoking localized service applications (26).

22. System according to one of the claims 12 to 21, **characterised in that** the mobile radio terminal (21) and/or the SIM card contain at least one localized service application (26).

## Revendications

1. Procédé pour la mise en oeuvre d'une application de service localisée (26) pour des abonnés de radiotéléphonie mobile et/ou des terminaux radiotéléphoniques mobiles, procédé dans lequel l'application localisée de service (26) transmet une instruction de détermination de position à un terminal radiotéléphonique mobile (21); procédé dans lequel des données d'identification de station et des données de mesure dépendant de la durée sont saisies et/ou déterminées par au moins deux stations de base de localisation différente dans le terminal radiotéléphonique mobile (21), les mesures de données, dépendant de la durée, dépendant des distances entre chacune des stations de base et le terminal radiotéléphonique mobile (21); procédé dans lequel il est calculé dans le terminal radiotéléphonique mobile (21), sur la base desdites données de mesure dépendant de la durée et sur la base de coordonnées de localisation desdites stations de base, une approximation de la position du terminal radiotéléphonique mobile (21); et procédé dans lequel l'approximation calculée pour la position du terminal radiotéléphonique mobile (21) est renvoyée et/ou transmise à l'application localisée de service (26) par le terminal radiotéléphonique mobile (21),
**caractérisé en ce**
**que** les données d'indentifications de station qui caractérisent lesdites stations de base sont transmises par le terminal radiotéléphonique mobile (21) à au moins un centre d'informations de localisation,
**que** les coordonnées de localisation desdites stations de base sont transmises par au moins un centre d'informations de localisation au terminal radiotéléphonique mobile (21),
**qu'**au moins une partie desdites données d'identification de localisation et une partie desdites données de mesure dépendant de la durée sont déterminées à partir de mesures telles qu'elles sont effectuées dans le cadre du processus de Handover (transfert intercellulaire) dans le terminal radiotéléphonique mobile.

2. Procédé selon la revendication 1, dans lequel lesdites stations de base font partie d'un ou de plusieurs contrôleurs de station de base et/ou d'un ou de plusieurs réseaux de radiotéléphonie mobile (20).

3. Procédé selon l'une des revendications 1 ou 2, dans lequel en tant que données de mesures dépendant de la durée, on saisit des valeurs de Timing Advance (avance de temps) qui sont transmises par les stations de base.

4. Procédé selon l'une des revendications 1 à 3, dans lequel une ou plusieurs des étapes de procédé suivantes sont exécutées dans la carte SIM: réception d'une instruction de détermination de position, saisie de données d'identification de station, saisie de données de mesure dépendant de la durée, demande de coordonnées de localisation des stations de base, réception de coordonnées de localisation des stations de base, détermination d'une approximation de la position du terminal radiotéléphonique mobile sur la base de données de mesure dépendant de la durée et sur la base de coordonnées de localisation des stations de base, et transmission de l'approximation de la position.

5. Procédé selon l'une des revendications 1 à 4, dans lequel on utilise, pour des calculs liés à la détermination de l'approximation de la position, un Gate-Array programmable (réseau prédiffusé de portes).

6. Procédé selon l'une des revendications 1 à 5, dans lequel on utilise pour des calculs liés à la détermination de l'approximation de la position, un lien avec un Mobile Station Application Execution Environment (MExE = environnement d'exécution pour applications mobiles).

7. Procédé selon l'une des revendications 1 à 7, le terminal radiotéléphonique mobile (21) et/ou l'abonné de radiotéléphonie mobile ne se trouvant dans son réseau domestique de radiotéléphonie mobile (20"),
**caractérisé en ce que** l'application localisée de service (26) transmet une instruction de localisation directement ou via une passerelle de localisation (25) à un centre d'informations de localisation (23) dans la zone du Mobile Switching Centre (MSC = centre de commutation mobile) (22), ou le terminal radiotéléphonique mobile (21) et/ou l'abonné de radiotéléphonie mobile sont enregistrés, procédé selon lequel dans le registre de localisation nominal Home Location Register (24) dudit réseau domestique de radiotéléphonie mobile (20") il est constaté dans quel réseau de radiotéléphonie mobile (20) et centre de commutation mobile (22), le terminal radiotéléphonique mobile (21) et/ou l'abonné de radiotéléphonie mobile sont enregistrés.

8. Procédé selon l'une des revendications 1 à 7, dans lequel lors de la consultation des applications de service localisées (26), un numéro de roaming (itinérance) est transmis en supplément de la consultation.

9. Procédé selon l'une des revendications 1 à 8, **caractérisé en ce que** l'application de service localisée (26) transmet une instruction de localisation et/ou un ordre pour un service localisé par Internet et/ou par internet mobile à une application de service localisée (26') et/ou à un centre de localisation (23) dans la zone du MSC (22), où le terminal radiotéléphonique mobile (21) et/ou l'abonné de radiotéléphonie mobile sont enregistrés.

10. Procédé selon l'une des revendications 1 à 8, **caractérisé en ce que** l'application de service localisée (26) est consultée depuis le terminal radiotéléphonique mobile (21) et/ou la carte SIM.

11. Procédé selon l'une des revendications 1 à 10, dans lequel l'application de service localisée (26) se trouve dans le terminal radiotéléphonique mobile (21) et/ou sur la carte SIM.

12. Système pour la mise en oeuvre d'une application de service localisée (26) pour des abonnés de radiotéléphonie mobiles et/ou des terminaux radiotéléphoniques mobiles, système qui comprend au moins un réseau de radiotéléphonie mobile (20) et un terminal radiotéléphonique mobile (21) ainsi que l'application de service localisée (26) qui transmet une instruction de localisation au terminal radiotéléphonique mobile (21), terminal radiotéléphonique mobile (21) qui comprend des moyens pour saisir et/ou définir des données d'identification de station et des données de mesure dépendant de la durée d'au moins deux stations de base de localisation différentes, les données de mesure dépendantes de la durée sont fonction des distances entre chacune des stations de base et du terminal radiotéléphonique mobile (21), terminal radiotéléphonique mobile (21) qui comprend les moyens supplémentaires pour calculer, sur la base desdites données de mesure dépendant de la durée et sur la base de coordonnées de localisation desdites stations de base, une approximation de la position du terminal radiotéléphonique mobile (21); et système qui comprend d'autres moyens pour transmettre l'approximation calculée de la position du terminal radiotéléphonique mobile (21) à l'application de service localisée (26),
**caractérisé en ce**
**que** le système comprend des moyens pour demander au moins depuis un centre d'informations de localisation des coordonnées de localisation desdites stations de base; pour transmettre à au moins un centre d'informations de localisation par le terminal radiotéléphonique mobile (21) les données d'identifications de station qui caractérisent lesdites stations de base; pour mettre à disposition les coordonnées de localisation desdites statons de base dans au moins un centre d'informations localisée; et pour transmettre les coordonnées de localisation desdites stations de base par au moins un centre d'informations de localisation au terminal radiotéléphonique mobile (21), et
**que** le terminal radiotéléphonique mobile (21) comprend des moyens pour déterminer au moins une partie desdites données d'identification de station et au moins une partie desdites données de mesures dépendant de la durée, tel qu'elles sont exécutées dans le cadre du processus de transfert cellulaire (handover), dans le terminal radiotéléphonique mobile (21).

13. Système selon la revendication 12, **caractérisé en ce que** le système comprend un ou plusieurs contrôleurs de station de base et/ou un ou plusieurs réseaux de radiotéléphonie mobile (20), contrôleurs de station de base et/ou réseaux de radiotéléphonies mobiles (20) dont font partie les stations de base.

14. Système selon l'une des revendications 12 ou 13, **caractérisé en ce que** une ou plusieurs stations de base comprennent des moyens pour définir des valeurs de Timing Advance (avance de temps) et les transmettre au terminal radiotéléphonique mobile (21) et **en ce que** le terminal radiotéléphonique mobile (21) comprend des moyens pour saisir les valeurs de Timing Advance en tant que données de mesures dépendant de la durée.

15. Système selon l'une des revendications 12 à 14, **caractérisé en ce que** le système comprend un terminal radiotéléphonique mobile (21) avec une carte SIM., la carte SIM comprenant des fonctions pour la mise en oeuvre d'une ou de plusieurs fonctions citées ci-après: réception d'une instruction d'une localisation, saisie de données d'identification de stations, saisie de données de mesures dépendant de la duré, requête de coordonnées de localisation de stations de base, réception de coordonnées de localisation des stations de base, définition d'une approximation de la position du terminal radiotéléphonique mobile sur la base de données de mesure dépendant de la durée et sur la base de coordonnés de localisation des stations de base et transfert de I#approximation de position.

16. Système selon l'une des revendications 12 à 15 dans lequel le terminal radiotéléphonique mobile (21) et/ou la carte SIM contient un Gate-Array programmable (réseau prédiffusé de portes) pour la mise en oeuvre de calculs dans le contexte de la détermination d'une approximation de la position.

17. Système selon l'une des revendications 12 à 16, dans lequel le système comprend un Mobile Station Application Execution Environment (MExE = environnement d'exécution pour applications mobiles) et en ce que le terminal radiotéléphonique mobile (21) et/ou la carte SIM comprend des moyens pour établir un lien avec un MExE pour des calculs en connexion avec la détermination d'une approximation de la position.

18. Système selon l'une des revendications 12 à 17, dans lequel le système comprend l'application de service localisée (26) ainsi que des moyens de transfert pour transmettre au cas où le terminal radiotéléphonique mobile (21) et/ou l'abonné de téléphonie mobile ne se trouvent pas dans un réseau domestique de radiotéléphonie mobile (20"), une instruction de localisation directe ou via une passerelle de localisation (25) à un centre de localisation (23) dans la zone du Mobile Switching Centre (MSC = centre de commutation mobile) (22) où le terminal radiotéléphonique mobile (21) et/ou l'abonné de radiotéléphonie mobile sont enregistrés, pour déterminer dans le registre de localisation nominal (Home Location Register) (24) dudit réseau de radiotéléphonie mobile (20") il est constaté dans quel réseau de radiotéléphonie mobile (20) et dans quel centre de commutation mobile (22), le terminal radiotéléphonique mobile (21) et/ou l'abonné de radiotéléphonie mobile sont enregistrés.

19. Système selon l'une des revendications 12 à 18, **caractérisé en ce que** le terminal radiotéléphonique mobile (21) et/ou la carte SIM sont enregistrés dans un réseau de radiotéléphonie mobile (20) qui comprend des moyens pour transmettre en supplément de la consultation un numéro d'itinérance (Roaming) à l'application de service localisée (26).

20. Système selon l'une des revendications 12 à 19, **caractérisé en ce que** le système comprend l'application de service localisée (26) pour transmettre une instruction de localisation et/ou un ordre pour un service localisé par Internet et/ou par Internet mobile à une application de service localisée (26') et/ou à un centre de localisation (23) dans le secteur du MSC (22), où le terminal radiotéléphonique mobile (21) et/ou l'abonné de radiotéléphonie mobile sont enregistrés.

21. Système selon l'une des revendications 12 à 20, **caractérisé en ce que** le terminal radiotéléphonique mobile (21) et/ou la carte SIM comprennent des moyens pour consulter des applications de service localisées (26).

22. Système selon l'une des revendications 12 à 21, **caractérisé en ce que** le terminal radiotéléphonique mobile (21) et/ou la carte SIM comportent au moins une application de service localisée (26).
